# EUROPEAN PATENT APPLICATION

(11) **EP 1 753 214 A1**
(43) Date of publication of application: **14.02.2007**
(21) Application number: 06118808.2
(22) Date of filing: 11.08.2006
(51) Int. Cl.: H04M 1/725, G06F 17/21

(54) **Method and apparatus for providing background effect to message in mobile communication terminal**

(30) Priority: 12.08.2005 KR 20050074273
(71) Applicant: Samsung Electronics Co., Ltd., Suwon-si, Gyeonggi-Do (KR)
(72) Inventor: Lee, Chul-Hwan, Seoul (KR)
(74) Representative: Grünecker, Kinkeldey, Stockmair & Schwanhäusser Anwaltssozietät

(57) **Abstract**

Disclosed are a method for providing a background effect to a received message in a mobile communication terminal and an apparatus thereof. The method includes parsing a received message and checking whether a specific character is contained in the received message; and when the specific character is contained in the received message, outputting a background effect, which is set in the specific character, together with the received message. Accordingly, the monotony of simple texts in a message service can be avoided. Also, different background effects can be displayed in the received messages, thus attracting more interest of the users.

## Description

The present invention relates generally to a mobile communication terminal, and in particular, to a method and an apparatus for providing a background effect to a received message in a mobile communication terminal.

The use of mobile communication terminals is rapidly increasing due to their portability convenience. With the increasing use of the mobile communication terminals, service providers (terminal manufacturers) are competitively developing mobile communication terminals having a variety of special functions for attracting users. For example, mobile communication terminals provide a phone book function, a game function, a scheduler function, a short messaging service (SMS) function, an Internet connection function, an e-mail function, an alarm function, an MPEG audio player-3 (MP3) function, a digital camera function and an electronic dictionary function.

The SMS is a service that can transmit a relatively short text message between mobile communication terminals or between a computer and a mobile communication terminal. The SMS can transmit a desired message regardless of call states of the other party's terminal and is less expensive than a voice communication. For these reasons, the SMS has been widely used since 1997, when it was commercialized.

Users now desire to transmit a message that is processed in various forms. In response to this demand for a next-generation messaging service, a multimedia messaging service (MMS) has emerged. The MMS is a service that can transmit photograph, video file, animation, and moving picture, as well as text message. The MMS is expected to replace the SMS in the near future.

Text message has been used and will continue to be used as an important means for communication. However, since the text message is comprised of a simple string of characters, it gives a monotonous and boring effect. Even in the case of mobile communication terminals having the function of setting a message's background image, only one background can be set. Thus, all background images of the received images are equal to one another. That is, due to the limitation of expression in the simple text format message, the conventional text message service has limitation in configuring individualized pictures and expressing user's individuality and emotion.

It is the object of the present invention to provide a method and an apparatus for providing a background effect to a message in a mobile communication terminal.

This object is solved by the subject matter of the independent claims.

Preferred embodiments are defined in the dependent claims.

Also, the present invention provides a method and an apparatus for providing different background effects to messages by setting background music and background image according to the contents of a received message in a mobile communication terminal. According to an aspect of the present invention, there is provided a method for providing a background effect to a received message in a mobile communication terminal, the method including parsing a received message and checking whether or not a specific character is contained in the received message; and when the specific character is contained in the received message, outputting a background effect, which is set in the specific character, together with the received message.

According to another aspect of the present invention, there is provided a method for providing a background effect to a received message in a mobile communication terminal, the method including parsing a received message and checking whether a preset specific character is contained in the received message; and when the specific character is contained in the received message, outputting a background effect, which is preset in an emotion category containing the corresponding specific character, together with the received message.

According to a further aspect of the present invention, there is provided a method for providing a background effect to a received message in a mobile communication terminal, the method including setting a specific character that is contained in the received message; and setting a background effect corresponding to the specific character.

According to a further aspect of the present invention, there is provided a method for providing a background effect to a received message in a mobile communication terminal, the method including setting a specific emotion category; setting at least one character expressing a specific emotion contained in the specific emotion category; and setting a background effect corresponding to the specific emotion category.

The accompanying drawings, which are included to provide a further understanding of the invention and are incorporated herein and constitute a part of this application, illustrate embodiment(s) of the invention and together with the description serve to explain the principle of the invention. In the drawings:

FIG. 1 is a bock diagram illustrating a mobile communication terminal according to the present invention;

FIG. 2 is a flowchart illustrating a method for setting a background effect of a received message in the mobile communication terminal according to the present invention;

FIG. 3 is a flowchart illustrating a method for outputting a background effect of a received message in the mobile communication terminal according to the present invention; and

FIG. 4 is a diagram illustrating an example of the background effect of the received message according to the present invention.

Reference will now be made in detail to the preferred embodiments of the present invention, examples of which are illustrated in the accompanying drawings. Like reference numerals denote like elements throughout the drawings. A detail description of well-known features will be omitted for conciseness.

Hereinafter, a method for providing a background effect of a received message in a mobile communication terminal according to the present invention will be described in detail with reference to the accompanying drawings.

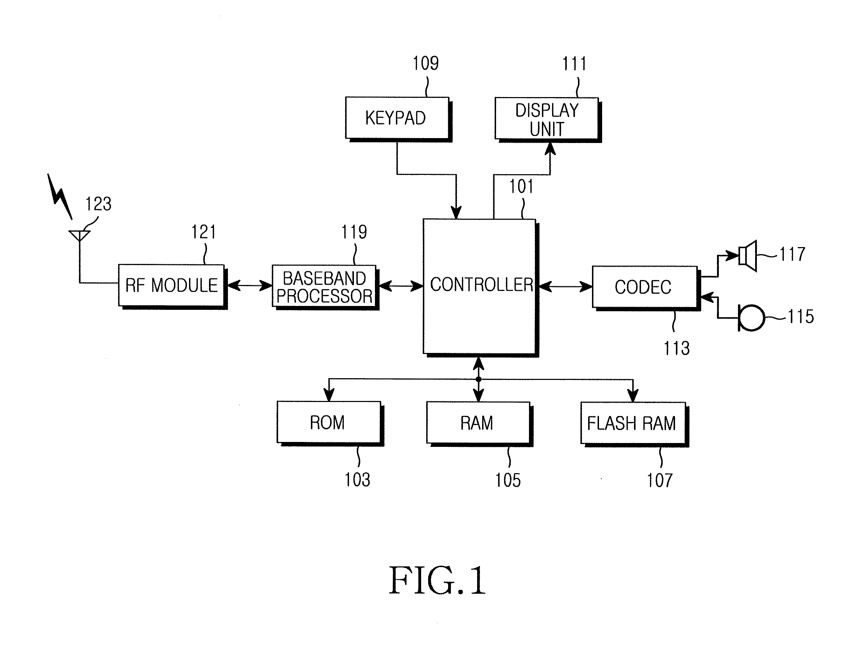

FIG. 1 is a block diagram illustrating a mobile communication terminal according to the present invention. Examples of the mobile communication terminal may include a cellular phone, a personal communication system (PCS) phone, a personal data assistant (PDA), and an international mobile telecommunication-2000 (IMT-2000) terminal. A following description will be made with reference to a general structure of the examples of the mobile communication terminal.

Referring to FIG. 1, a controller (or a microprocessor unit (MPU)) 101 controls an overall operation of the portable terminal. For example, the controller 101 processes and controls a voice communication and a data communication. In addition, the controller 101 processes the function of providing a background effect depending on the contents of a received message. A detailed description about the general process and control operations of the controller 101 will be omitted for conciseness.

A read only memory (ROM) 103 stores a variety of reference data and microcodes of a program for the process and control operation of the controller 101. Specifically, the ROM 103 stores a program for providing a background effect depending on the contents of the received message. A random access memory (RAM) 105 is a working memory of the controller 101, which temporarily stores data generated while various programs are running. A flash RAM 107 is a nonvolatile memory that can erase data in units of blocks and reprogram data. Specifically, the flash RAM 107 stores a background effect (e.g., background music and background image) corresponding to user's specific intention (emotion), and also stores words, sentences, or special characters expressing the user's intention (emotion).

The keypad 109 includes numeric keys of digits 0-9 and a plurality of function keys, such as a Menu key, a Cancel (Delete) key, a Conformation key, a Talk key, an End key, an Internet connection key, and Navigation keys (▲/▼/◄/►). In addition, the keypad 109 provides the controller 101 with a key input data corresponding to a key pressed by the user. The display unit 111 displays status information generated during operations of the mobile communication terminal, numerals and characters, moving pictures and still pictures, and so on. A color liquid crystal display (LCD) may be used for the display unit 111.

A coder-decoder (codec) 113 connected to the controller 101, and a microphone 115 and a speaker 117 connected to the codec 113 serve as an audio input/output block for a voice communication. The codec 113 converts digital data provided from the controller 101 into analog audio signals. The analog audio signals are outputted through the speaker 117. Also, the codec 113 converts audio signals received through the microphone 115 into digital data and provides the digital data to the controller 101.

A radio frequency (RF) module 121 down-converts a frequency of an RF signal received through an antenna 123 and provides the down-converted RF signal to a baseband processor 119. Also, the RF module 121 up-converts a frequency of a baseband signal provided from the baseband processor 119 and transmits the up-converted baseband signal through the antenna 123. The baseband processor 119 processes the baseband signals that are transmitted/received between the RF module 121 and the controller 101. For example, upon a transmission operation, the RF module 121 performs a channel coding and a spreading with respect to an outgoing data. Upon a reception operation, the RF module 121 performs a despreading and a channel decoding with respect to an incoming signal

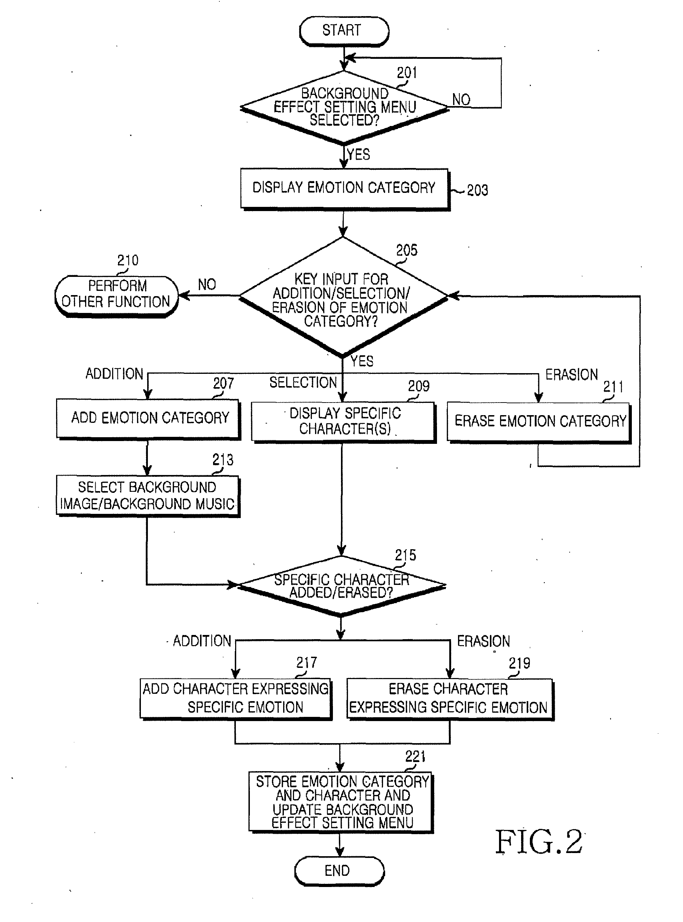

FIG. 2 is a flowchart illustrating a method for setting a background effect of a message in a mobile communication terminal according to the present invention. The message includes an SMS message and a cell broadcasting service (CBS) message.

Referring to FIG. 2, in operation 201, the controller 101 checks whether the user inputs a key for selecting a background effect setting menu. In operation 203, when the user's key input is detected, the controller 101 displays emotion categories stored in the flash RAM 107. At this point, the user can add or erase the emotion categories and can select a specific emotion category and add character(s) to the selected emotion category so as to convey a specific emotion.

In operation 205, the controller 101 checks whether the user inputs a key for adding/selecting/erasing the emotion categories. When the user's key input is not detected, the controller 101 performs other functions in operation 210.

In operation 207, when the user's key input for adding the emotion category is detected, the controller 101 adds the emotion category through a key manipulation. The emotion category may include "depression mode", "delight mode", "gratitude mode", and "apology mode".

In operation 213, when the addition of the emotion category is completed, the controller 101 selects background image and background music according to the user's key manipulation. The user can select one of the image, the photograph, and the moving picture, which are stored in the flash RAM 107, and designate the selected one as the background image. The image, the photograph, or the moving picture can be provided as a default in the mobile communication terminal, or can be directly downloaded by the user. Also, the user can select a music from the flash RAM 107 and stores the selected music as the background music. The music can be provided as a default in the mobile communication terminal, or can be directly downloaded by the user.

In operation 215, when the selection of the background image and the background music is completed, the controller 101 checks whether the user inputs a key for adding/erasing a specific character. In operation 217, when the key input for adding the specific character is detected, the controller 101 adds a word, a sentence, or a special character, which conveys a specific emotion. For example, the word, the sentence, or the special character expressing the specific emotion may be "congratulation" [delight mode], "sad" [depression mode], "sorry" [apology mode], "thanks" [gratitude mode], and "_{*}^^_{*}" [delight mode], or may be more than one word, sentence, or special character. In operation 219, when the key input for erasing the specific character is detected, the controller 101 erases the word, the sentence, or the specific character, which expresses the specific emotion. The word, the sentence, or the special character may be erased at the same time. In operation 221, when the setting of the background effect is determined as being completed, the controller 101 stores the emotion category and the character expressing the specific emotion in the flash RAM 107. After the background effect setting menu is updated in this manner, the algorithm of the present invention is ended.

In operation 209, when the user's key input for selecting the specific emotion category is detected in operation 205, the controller 101 displays specific characters corresponding to the selected emotion category. Then, in operation 215, the controller 101 checks whether the user inputs the key for adding/erasing the specific characters. In this manner, the characters expressing the specific emotion can be added/erased according to the user's key input. In operation 211, when the user's key input for erasing the specific emotion category is detected in operation 205, the controller 101 erases the corresponding emotion category. Then, the process returns to the above operation 205.

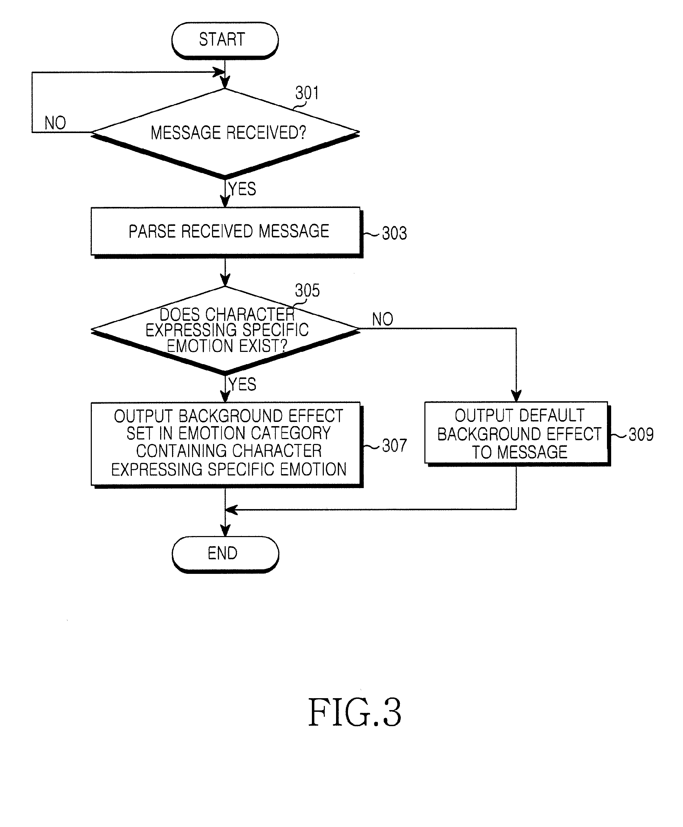

FIG. 3 is a flowchart illustrating a method for outputting the background effect of the received message in the mobile communication terminal according to the present invention.

Referring to FIG. 3, in operation 301, the controller 101 checks whether a message is received. In operation 303, when the message is received, the controller 101 parses the contents of the received message.

In operation 305, the controller 301 checks whether a word, a sentence, or a special character expressing a special emotion, which is preset in the background effect setting menu, is contained in the received message. In operation 307, when the work, the sentence, or the special character conveying the specific emotion is contained in the received message, the controller 101 outputs a background effect (that is, background image and background music), which is set in the emotion category containing the word, the sentence, or the special character, together with the received message. In operation 309, when the word, the sentence, or the special character conveying the special emotion is not contained in the received message, the controller 101 outputs a default background effect together with the received message.

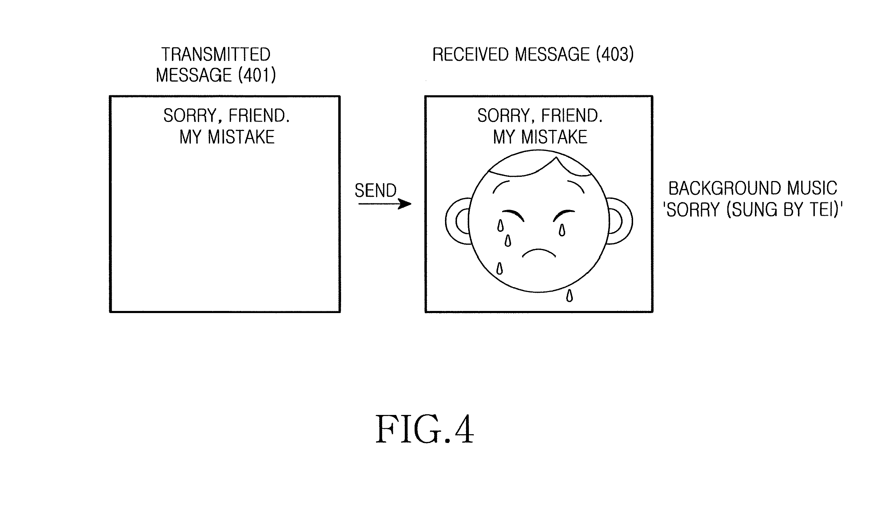

FIG. 4 is a diagram illustrating an example of the background effect of the received message. It will assumed that the flash memory 107 of the receiver terminal stores the emotion categories including "delight mode" and "apology mode" according to the user's setting; "Sorry", "My mistake", and "I'm sorry" are set and stored as the word, the sentence, or the special character expressing the specific emotion in the apology mode; "Sorry" sung by Tei is set as a background music in the apology mode of the emotion category; and a picture tilted "crying friend" is set as a background image in the apology mode of the emotion category. Also, it will be assumed that "congratulation" is set as a background music in the delight mode of the emotion category; a photograph titled "rose" is set as a background image in the delight mode of the emotion category; when the word, the sentence, or the special character conveying the specific emotion is not contained in the received message, "Milk Song" set as a default background music and a picture titled "my picture" and set as a default background image can be outputted together with the received message.

Referring to FIG. 4, when an originator sends a message 401 containing "Sorry, friend. My mistake", the receiver terminal parses the received message 401 and determines that the words "sorry" and "my mistake" are words conveying the specific emotion corresponding to the apology mode of the emotion category stored in the flash memory 107. In this case, the receiver terminal sets the song "Sorry", sung by Tei, as a background music, and sets the picture titled "Crying Friend" as a background image in the received message. Then, when the contents of the received message are displayed on the display unit 111 according to the user's key input, the set background music is outputted through the speaker 117 and the set background image is outputted together with the received message 403.

In another embodiment, when words, sentences, or special characters conveying a specific emotion exist in several different emotion categories, one of the background effects preset in an emotion category containing a word expressing a primary specific emotion or a word conveying a final specific emotion may be outputted, or the background effects previously set in the emotion category may be sequentially outputted at regular intervals according to searching order of words conveying a specific emotion. Alternatively, the background effects may be outputted according to priority of the emotion categories.

By differently setting the background image and the background music according to the contents of the received message, the monotony of the simple texts in the SMS service can be avoided. Also, different background effects can be displayed in the received messages, thus attracting more interest of the users. In addition, when sending the message, the background image and the background music are not contained in the message. Therefore, it is not necessary to decrease the number of characters to be transmitted. Further, since the method of the present invention has no difference from the conventional message sending method, the providers need not pay additional cost.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A method for providing a background effect to a received message in a mobile communication terminal, the method comprising:
parsing a received message and checking whether a specific character is contained in the received message; and
outputting a background effect, which is set in the specific character, together with the received message when the specific character is contained in the received message.

2. The method of claim 1, further comprising outputting a default background effect together with the received message when the specific character is not contained in the received message.

3. The method of claim 1 or 2, wherein the specific character is a character conveying human emotions.

4. The method of one of claims 1 to 3, wherein the background effect includes at least one of a background music and a background image.

5. The method of claim 1, wherein the specific character is a preset specific character and the background effect is preset in an emotion category containing the corresponding specific character.

6. The method of claim 5, wherein when words conveying the specific emotion exist in different emotion categories, one of background effects preset in emotion categories containing one of a word conveying a primary specific emotion and a word conveying a final specific emotion is outputted.

7. The method of claim 5 or 6, wherein when words conveying the specific emotion exist in different emotion categories, background effects preset in emotion categories are sequentially outputted at regular intervals according to searching orders of words conveying the specific emotion.

8. The method of one of claims 5 to 8, wherein when words conveying the specific emotion exist in different emotion categories, background effects are outputted according to priority of the emotion category.

9. The method of one of claims 5 to 9, wherein the character conveying the specific emotion is one of a word, a sentence, and a special character representing human emotions.

10. A method for providing a background effect to a received message in a mobile communication terminal, the method comprising:
setting a specific character that is contained in the received message; and
setting a background effect corresponding to the specific character.

11. The method of claim 10, wherein the specific character is a word conveying human emotions.

12. The method of claim 10 or 11, wherein the background effect includes at least one of a background music and a background image.

13. The method of claim 10, further comprising:
setting a specific emotion category;
wherein the specific character is set to convey a specific emotion contained in the specific emotion category, and the background effect corresponds to the specific emotion category.

14. The method of claim 13, wherein the character conveying the specific emotion is one of a word, a sentence, and a special character representing human emotions.

15. The method of claim 13 or 14, wherein a priority is set in the specific emotion category.

16. A mobile telecommunication terminal for providing a background effect to a received message, comprising:
a display unit for displaying a received message; and
a controller for checking whether a specific character is contained in the received message, and when the specific character is contained in the received message, outputting a background effect, which is set in the specific character, together with the received message.

17. The mobile communication terminal of claim 16, wherein the controller outputs a default background effect together with the received message when the specific character is not contained in the received message.

18. The mobile communication terminal of claim 16, wherein the specific character is a preset specific character and the background effect is preset in an emotion category containing the corresponding specific character.

19. The mobile communication terminal of claim 18, wherein when words conveying the specific emotion exist in different emotion categories, one of background effects preset in emotion categories containing one of a word conveying a primary specific emotion and a word conveying a final specific emotion is outputted.

20. The mobile communication terminal of claim 18, wherein when words conveying the specific emotion exist in different emotion categories, background effects preset in emotion categories are sequentially outputted at regular intervals according to searching orders of words conveying the specific emotion.
